# EUROPEAN PATENT APPLICATION

(11) **EP 4 766 009 A1**
(43) Date of publication of application: **24.06.2026**
(21) Application number: 24867243.8
(22) Date of filing: 27.08.2024
(51) Int. Cl.: H04W 80/06

(54) **INFORMATION PROCESSING METHODS, INFORMATION TRANSMISSION METHOD, TERMINAL, SYSTEM, DEVICE AND MEDIUM**

(30) Priority: 19.09.2023 CN 202311216083
(71) Applicant: ZTE CORPORATION, Shenzhen, Guangdong 518057 (CN)
(72) Inventor: ZHANG, Lu, Shenzhen, Guangdong 518057 (CN); FANG, Yanwei, Shenzhen, Guangdong 518057 (CN); SHI, Tingxiang, Shenzhen, Guangdong 518057 (CN); LU, Wei, Shenzhen, Guangdong 518057 (CN); LI, Liping, Shenzhen, Guangdong 518057 (CN); JIN, Bin, Shenzhen, Guangdong 518057 (CN)
(74) Representative: Canzler & Bergmeier Patentanwälte Partnerschaft mbB
(86) International application number: PCT/CN2024/114738
(87) International publication number: WO 2025/060829

(57) **Abstract**

The present application provides information processing methods, an information transmission method, a user terminal, a communication system, a network device and a computer-readable storage medium. An information processing method comprises: performing feature extraction on collected first multi-dimensional image data, so as to obtain feature information of the first multi-dimensional image data; converting the feature information into first behavior instruction data, the first behavior instruction data being used for indicating behavior information of a first user to which a first user terminal belongs; and transmitting the first behavior instruction data to a second user terminal via a dedicated channel, the dedicated channel being a data transmission channel established in advance on the basis of a real-time communication technology, and the second user terminal being configured to perform information reconstruction according to the first behavior instruction data, so as to obtain reconstructed first multi-dimensional image data.

## Description

### CROSS-REFERENCE TO RELATED APPLICATIONS

This application claims priority from Chinese patent application No. 202311216083.3 filed on September 19, 2023, the entirety of which is incorporated hereby by reference.

### TECHNICAL FIELD

The present application relates to the field of communication technology, and in particular, relates to an information processing method, an information transmission method, a user terminal, a communication system, a network device and a computer-readable storage medium.

### BACKGROUND

With the development of networks of the 5th generation mobile communication technology (5G) and the 6th generation mobile communication technology (6G), various new video communication technologies, including virtual reality (VR), augmented reality (AR), holographic projection, and the like, have been developed.

Despite uplink and downlink rates of the 5G and 6G wireless side networks increasing, the bandwidth becomes larger and larger. However, the amount of data transmitted over various applications is also increasing. Taking a holographic video communication as an example, for a real person or 70-inch television screen, the amount of data dynamically transmitted in a single data stream is about 1.9Tbps, requiring a delay from 1ms to 5ms, if applied in a multi-person conference scene, the amount of data will be multiplied, it is difficult to meet the requirement as mentioned above through the existing wireless bandwidth, resulting in a lower bandwidth utilization rate.

### SUMMARY

The present application provides an information processing method applied to a first user terminal, including: performing feature extraction on collected first multi-dimensional image data to obtain feature information of the first multi-dimensional image data; converting the feature information into first behavior instruction data that indicates behavior information of a first user to which the first user terminal belongs; and transmitting the first behavior instruction data to a second user terminal via a dedicated channel, the dedicated channel being a data transmission channel established in advance based on a web real-time communication, and the second user terminal being configured to perform information reconstruction based on the first behavior instruction data to obtain reconstructed first multi-dimensional image data.

The present application provides an information processing method applied to a second user terminal, including: receiving first behavior instruction data of a first user terminal through a dedicated channel, the dedicated channel being a data transmission channel established in advance based on a web real-time communication, and the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and performing information reconstruction based on the first behavior instruction data to obtain reconstructed first multi-dimensional image data.

The present application provides an information transmission method applied to a communication system, including: receiving first behavior instruction data of a first user terminal, the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and transmitting the first behavior instruction data to a second user terminal through a dedicated channel, the dedicated channel being a data transmission channel established in advance based on a web real-time communication, and the second user terminal being configured to perform information reconstruction based on the first behavior instruction data to obtain reconstructed first multi-dimensional image data.

The present application provides a user terminal, including: an extraction module configured to perform feature extraction on collected first multi-dimensional image data to obtain feature information of the first multi-dimensional image data; a conversion module configured to convert the feature information into first behavior instruction data that indicates behavior information of a first user to which a first user terminal belongs; and a transmission module configured to transmit the first behavior instruction data to a second user terminal via a dedicated channel, the dedicated channel being a data transmission channel established in advance based on a web real-time communication, and the second user terminal being configured to perform information reconstruction based on the first behavior instruction data to obtain reconstructed first multi-dimensional image data.

The present application provides a user terminal, including: a receiving module configured to receive first behavior instruction data of a first user terminal through a dedicated channel, the dedicated channel being a data transmission channel established in advance based on a web real-time communication, and the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and a reconstruction module configured to perform information reconstruction based on the first behavior instruction data to obtain reconstructed first multi-dimensional image data.

The present application provides a communication system, including: a receiving module configured to receive first behavior instruction data of a first user terminal, the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and a transmission module configured to transmit the first behavior instruction data to a second user terminal through a dedicated channel, the dedicated channel being a data transmission channel established in advance based on a web real-time communication, and the second user terminal being configured to perform information reconstruction based on the first behavior instruction data to obtain reconstructed first multi-dimensional image data.

The present application provides a network device, including: at least one processor; and a memory having at least one computer program stored thereon, the at least one computer program is to be executed by the at least one processor, to cause the at least one processor to implement the information processing method described above.

The present application provides a computer-readable storage medium having a computer program stored thereon, the computer program is to be executed by a processor, to cause the processor to implement the information processing method described above.

With respect to above and other aspects of the present application and implementations thereof, further illustrations are provided in the brief description of drawings, the detailed description of embodiments, and the claims.

### BRIEF DESCRIPTION OF DRAWINGS

FIG. 1 shows a flowchart of an information processing method applied to a first user terminal according to the present application.
FIG. 2 shows a schematic diagram illustrating a principle of collection and generation of a holographic image according to the present application.
FIG. 3 shows a schematic diagram illustrating a principle of reconstruction of a holographic image according to the present application.
FIG. 4 shows an information processing method applied to a second user terminal according to the present application.
FIG. 5 shows an information processing method applied to a communication system according to the present application.
FIG. 6 shows a schematic diagram of an exemplary architecture of a communication system according to the present application.
FIG. 7 shows a schematic diagram of an exemplary detailed architecture of a communication system according to the present application.
FIG. 8 shows an exemplary flowchart of an information processing method applied to a first user terminal according to the present application.
FIG. 9 shows an exemplary flowchart of an information processing method applied to a second user terminal according to the present application.
FIG. 10 shows a schematic structural diagram of a first user terminal according to the present application.
FIG. 11 shows a schematic structural diagram of a second user terminal according to the present application.
FIG. 12 shows a schematic structural diagram of a communication system according to the present application.
FIG. 13 shows a block diagram of an exemplary hardware architecture of a computing device for implementing a method and an apparatus according to the present application.

### DETAIL DESCRIPTION OF EMBODIMENTS

For clarity and better understanding objects, technical solutions and advantages of the present application, implementations of the present application will be described in detail in conjunction with the accompanying drawings. It should be noted that the implementations of the present application and features therein may be combined with each other in any manner, as long as they are not contradictory.

With the development of 5G and 6G networks, various new video communication technologies, including virtual reality (VR), augmented reality (AR), holographic projection, and the like, have been developed. VR is a computer simulation system by which a virtual world can be created and experienced, and employs a computer to generate a simulation/virtual environment to achieves a system simulation of a three-dimensional dynamic visual scene and an entity behavior, fused with multi-source information, based on a binocular parallax of a person, so that a user can be immersed in the virtual/simulation environment. AR is a technology that calculates a position and an angle of a camera image in real time and adds a corresponding image thereto, which is a new technology for a "seamless" integration of real world information and virtual world information, and aims to embed a virtual image into the real world on a screen. The holographic technology is a technology that records a three-dimensional image of an object according to the principle of interference and reproduces the three-dimensional image of the object by diffraction. The holographic technology can record and reproduce all information of amplitudes and phases of light waves of an object to obtain a stereoscopic image which is identical with the original object. The stereoscopic image may be used for viewing a reproduced virtual image of a holograph from various angles, so that different sides of the object can be viewed with a parallax effect and a depth-of-field feel.

The holography is different from a conventional photography. In the conventional photography, light emitted from an object, or light emitted from a surface of the object and refracted, is imaged through an objective lens, so that a light intensity is recorded on a photosensitive film, and a plane image of the object is developed on a photographic paper. In contrast, the holography is a lens-free imaging method which records all information (called a holograph), i.e., amplitudes and phases, of a photographed object on a holographic plate according to the principle of light interference. In response to a reproduction of the holograph, a stereoscopic and vivid object can be seen.

The digital holography technology records interference fringes generated by a coherent superposition of light waves reflected by an object and reference light waves through a charge coupled device (CCD) or the like (a real-time recording process), and then reconstructs a reproduced image of the object in a computer (a digital reconstruction process). This technology can reflect the original object more truly since it can record not only amplitude information but also phase information of the object.

Despite uplink and downlink rates of the 5G and 6G wireless side networks increasing, the bandwidth becomes larger and larger. However, the amount of data transmitted over various applications is also increasing. Taking a holographic video communication as an example, for a real person or 70-inch television screen, the amount of data dynamically transmitted in a single data stream is about 1.9Tbps, requiring a delay from1ms to 5ms, if applied in a multi-person conference scene, the amount of data will be multiplied, it is difficult to meet the requirement as mentioned above through the existing wireless bandwidth.

In the existing art, a video content may be compressed to reduce the amount of data of the video content. However, on one hand, this method is generally only suitable for two-dimensional images, but not suitable for three-dimensional images in technologies such as VR, AR, holography and the like. There is no technology for realizing a holographic real-time communication in the existing art yet. On another hand, due to differences between terminals used by communication parties, the method of compressing the video content has some defects for matching different types of terminals. For example, during a mobile phone communicates with a dedicated large-screen device, a picture captured by the mobile phone may be blurred during being presented on the dedicated large-screen device.

Therefore, the present application provides an information processing method, an information transmission method, a user terminal, a communication system, a network device and a computer-readable storage medium, which can reduce an occupation of bandwidth and improve the utilization rate of the bandwidth.

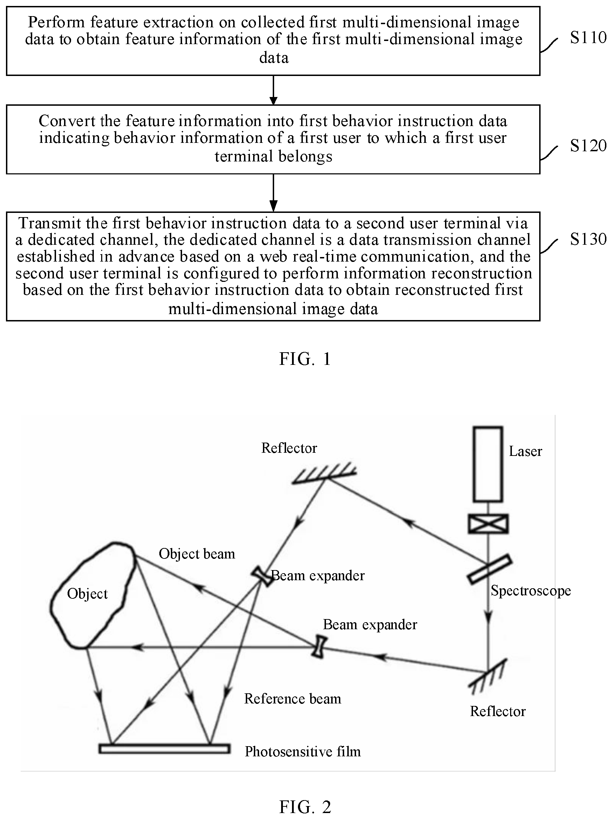

FIG. 1 is a flowchart of an information processing method applied to a first user terminal according to the present application.

In a first aspect, referring to FIG. 1, the present application provides an information processing method which is applied to a first user terminal and includes following operations S110 to S130.

At S110, performing feature extraction on collected first multi-dimensional image data to obtain feature information of the first multi-dimensional image data.

In this operation, the multi-dimensional image data includes at least one of a multi-dimensional image or the corresponding audio data. The multi-dimensional image has two or more dimensions. For example, the multi-dimensional image may be a two-dimensional image, a three-dimensional image, or a higher-dimensional image. In response to the multi-dimensional image being a three-dimensional image, the multi-dimensional image data may be at least one of VR image data, VR video data, AR image data, AR video data, holographic image data, or holographic video data.

In this operation, illustratively, in response to the first multi-dimensional image data including a multi-dimensional image, the feature information corresponding thereto includes, but is not limited to, at least one of color, shape, texture, depth or the like. In response to the first multi-dimensional image data including the corresponding audio data, the feature information corresponding thereto includes, but is not limited to, at least one of tone or intonation.

The following explains the principle of collection and generation of holographic image data by taking the multi-dimensional image data being holographic image data as an example. FIG. 2 is a schematic diagram illustrating a principle of collection and generation of a holographic image according to the present application.

As shown in FIG. 2, a collection device for collecting the holographic image data is a laser which emits a laser beam, the laser beam is split into two parts by a spectroscope, with one part of the laser beam irradiating on an object to be photographed and being called an object beam, and the other part of the laser beam directly irradiating on a photosensitive film, i.e., a holographic plate, and being called a reference beam. After the beam is reflected by the object, the reflected beam also irradiates on the film, as such, a holograph is captured.

It can be seen from FIG. 2 that, during collecting a digital holographic image, a digital matrix, i.e., a digital holograph, is generated by interfering object light waves emitted from a surface of an object with reference light waves on a target surface of a CCD, recording a distribution of light intensity by the CCD, and sending the distribution of light intensity to a computer to be stored.

In this operation, the first user terminal belongs to a first user, and the terminal of the first user acquires data, such as a digital holographic image and related sensor data, and the like.

At S120, converting the feature information into first behavior instruction data indicating behavior information of a first user to which the first user terminal belongs.

Illustratively, the first behavior instruction data includes, for example, the body rotating by 15 degrees clockwise, the head tilting up by 45 degrees, and the like. In this operation, the feature information of the first multi-dimensional image data may be converted into behavior instruction data of the corresponding user, so as to perform behavior recognition on the first user. The behavior recognition is a process of performing operations such as action feature extraction, feature representation, action recognition and the like on a video sequence (e.g., a multi-frame image) including an action behavior of the user, and belongs to the category of performing semantic understanding on the multi-dimensional image data.

At S 130, transmitting the first behavior instruction data to a second user terminal via a dedicated channel, the dedicated channel being a data transmission channel established in advance based on a web real-time communication, and the second user terminal being configured to perform information reconstruction based on the first behavior instruction data to obtain reconstructed first multi-dimensional image data for displaying behavior information of the first user at the second user terminal.

In this operation, the dedicated channel may be a data transmission channel established in advance based on a web real-time communication (WebRTC). The dedicated channel is different from a conventional audio/video channel. Illustratively, the dedicated channel may be, for example, a channel established based on a streaming protocol. Streaming protocols are generally divided into protocols for transmitting a control message and protocols for transmitting media data. The protocol for transmitting media data is generally used for transmitting audio/video media data, for example, includes a real-time transport protocol (RTP), a real-time control protocol (RTCP), secure real-time transport protocol (SRTP), and the like.

According to the information processing method of the present application, the first user terminal performs feature extraction on collected first multi-dimensional image data, converts the extracted feature information of the first multi-dimensional image data into first behavior instruction data, and transmit the first behavior instruction data to a second user terminal via a dedicated channel, the dedicated channel being a data transmission channel established in advance based on a web real-time communication, and the second user terminal performs information reconstruction based on the first behavior instruction data to obtain reconstructed first multi-dimensional image data. In this method, the multi-dimensional image data is transmitted after being converted into behavior instruction data, which can reduce the data transmission traffic, and thus reduce the occupation of bandwidth and improve the utilization rate of the bandwidth. Furthermore, the dedicated channel, i.e., the data transmission channel established based on the web real-time communication, allows the user terminal to establish a point-to-point connection with the communication network without any intermediary, and thus, by transmitting the first behavior instruction data to the second user terminal via the dedicated channel, an efficient data transmission can be realized.

In this operation, after receiving the first behavior instruction data, the second user terminal performs information restoration (i.e., information reconstruction) based on the behavior instruction data, and present the reconstructed multi-dimensional image data.

The following explains the principle of reconstructing a holographic image by taking the multi-dimensional image data being the holographic image data as an example.

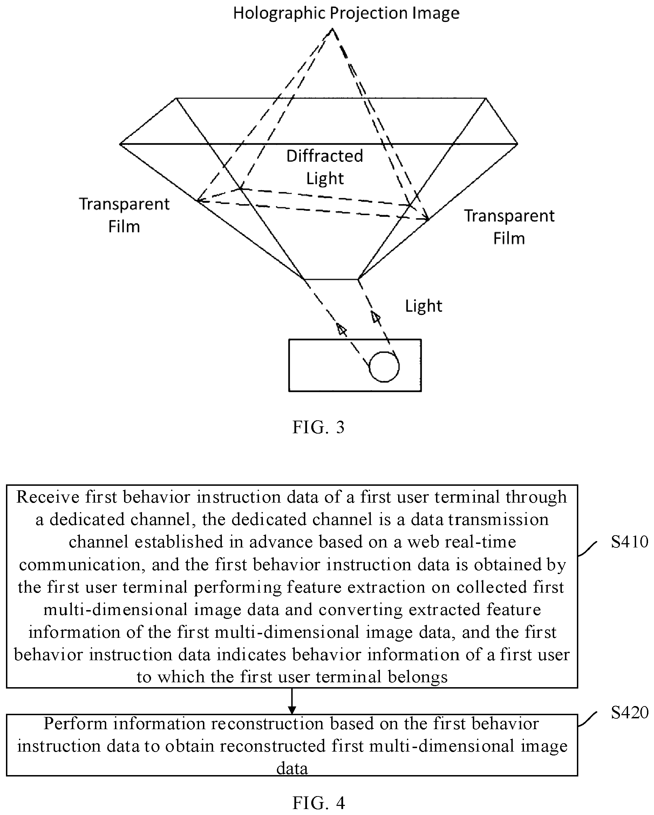

FIG. 3 is a schematic diagram illustrating a principle of reconstructing a holographic image according to the present application.

In practical applications, since phase and amplitude information of light is recorded on the holographic film (plate), under an irradiation of coherent laser light, diffracted light waves of a linearly recorded sinusoidal holograph can generally generate two images, i.e., an original image (also referred to as an initial image) and a conjugate image, so that the reproduced image provides a strong stereoscopic impression and has a real visual effect. Since each part of the holograph records light information of every point on the object, in principle, each part of the holograph can reproduce the image of the entire original object, and through multiple times of exposure, a plurality of different images can be recorded on a same film and displayed independently without interference with each other.

As shown in FIG. 3, a projection device may project a holographic image onto a holographic projection film (transparent film) at different angles, and reproduce the light wave information of the object according to the principle of diffraction, so that the image is displayed as a holographic projection image, thereby achieving a reproduction of a three-dimensional image of the object.

According to the information processing method of the present application, the first user terminal performs feature extraction on collected first multi-dimensional image data, converts the extracted feature information of the first multi-dimensional image data into first behavior instruction data, and transmit the first behavior instruction data to a second user terminal via a dedicated channel, the dedicated channel being a data transmission channel established in advance based on a web real-time communication, and the second user terminal performs information reconstruction based on the first behavior instruction data to obtain reconstructed first multi-dimensional image data. In this method, the multi-dimensional image data is transmitted after being converted into behavior instruction data, which can reduce the data transmission traffic, and thus reduce the occupation of bandwidth and improve the utilization rate of the bandwidth. Furthermore, the dedicated channel, i.e., the data transmission channel established based on the web real-time communication, allows the user terminal to establish a point-to-point connection with the communication network without any intermediary, and thus, by transmitting the first behavior instruction data to the second user terminal via the dedicated channel, an efficient data transmission can be realized.

According to the information processing method, for solving the problems of overlarge bandwidth occupation and low bandwidth utilization rate in the current VR, AR and holographic communications, the information to be transmitted by the user terminal is abstracted and described (by feature extraction and conversion) to obtain the corresponding behavior instruction data, and the behavior instruction data is transmitted to the user terminal as a communication peer through the dedicated channel in the network. Then, the user terminal as the communication peer performs information reconstruction based on the behavior instruction data, and converts the received behavior instruction data into multi-dimensional image data through the information reconstruction. In other words, in this method, instead of transmitting the original collected data per se, the behavior instruction data subjected to an abstraction (i.e., feature extraction and conversion) is transmitted in the communication between the first user terminal and the second user terminal, thereby greatly reducing the data transmission traffic. Taking a holographic communication as an example, in an actual scene, with the information processing method of the present application, the utilization rate of the bandwidth is greatly improved as the data transmission traffic is greatly reduced and the occupation of bandwidth is reduced by more than 80%.

In some implementations, the first multi-dimensional image data includes multi-dimensional image data, and the feature information is a multi-dimensional image data feature, the operation S110 includes: preprocessing multi-dimensional image data collected by an image sensor, the preprocessing including at least one of image denoising, image alignment, attitude correction or motion compensation; and performing feature extraction on the preprocessed multi-dimensional image data to obtain the multi-dimensional image data feature.

In these implementations, the first user terminal performs data preprocessing, such as image denoising, image alignment, attitude correction, motion compensation, and the like, to improve the quality and usability of data.

In some implementations, the operation S120 of converting the feature information into the first behavior instruction data includes: matching the feature information with a semantic knowledge base to obtain semantic information corresponding to the feature information, the semantic information including description information of an entity behavior; and converting the description information of the entity behavior into corresponding first behavior instruction data.

Illustratively, the semantic knowledge base may include knowledge in various fields, and if the multi-dimensional image data is holographic image data, the semantic knowledge base includes an indication in the holographic field, for example, includes at least one of an entity, a relationship, an event or the like. The event is a knowledge segment that may be triggered by a certain action or occur due to a change of state.

Illustratively, the semantic knowledge base may include semantic information of multiple pieces of multi-dimensional image data. A similarity between the feature information of the first multi-dimensional image data and the feature information of every piece of multi-dimensional image data in the semantic knowledge base is calculated to obtain the image data with the highest similarity, and the semantic information of the multi-dimensional image data with the highest similarity is taken as the corresponding semantic information matched with the feature information of the first multi-dimensional image data.

In these implementations, the first user terminal matches and parses the extracted feature information with the semantic knowledge base to obtain the semantic information, and then expresses the semantic information semantically to obtain the first behavior instruction data, and by representing the multi-dimensional image data as the corresponding behavior instruction data, the data transmission traffic can be greatly reduced.

In some implementations, the dedicated channel includes: a first dedicated channel between the first user terminal and a first communication network, and a second dedicated channel between the second user terminal and a second communication network.

In these implementations, before the operation S130 of transmitting the first behavior instruction data to the second user terminal via the dedicated channel, the information processing method further includes following operations S11 to S13.

At S11, sending a first session request to the first communication network corresponding to the first user terminal, the first session request including at least first dedicated channel media information of the first user terminal and service type indication information, the first communication network being configured to forward, via the second communication network corresponding to the second user terminal, the first dedicated channel media information and the service type indication information to the second user terminal.

At S12, receiving, via the first communication network, a session response forwarded by the second communication network from the second user terminal, the session response being generated and sent to the second communication network by the second user terminal after receiving the first dedicated channel media information and the service type indication information, and the session response including second dedicated channel media information of the second user terminal, the first communication network being further configured to forward the session response to the first user terminal, and the second communication network being further configured to establish the second dedicated channel with the second user terminal based on the received second dedicated channel media information.

At S13, establishing, in response to the session response, the first dedicated channel with the first communication network based on the first dedicated channel media information.

In the above operations S11 to S13, the dedicated channel includes the first dedicated channel, the first communication network, the second communication network and the second dedicated channel. To establish the first dedicated channel and the second dedicated channel, the media information is to be indicated to a participant, for example, the user terminal as the communication peer, and a certain type of call services is indicated through the service type indication information, for example, in response to the service type indication information being a holographic communication media label, it indicates that the session request is configured to implement a holographic communication service.

In some implementations, the operation S130 of transmitting the first behavior instruction data to the second user terminal via the dedicated channel includes: sending the first behavior instruction data to the first communication network through the first dedicated channel, the first communication network being configured to send the first behavior instruction data to the second communication network, and the second communication network being configured to send the first behavior instruction data to the second user terminal through the second dedicated channel.

In these implementations, the first behavior instruction data is transmitted through the pre-established dedicated channel (including the first dedicated channel and the second dedicated channel), which is different from an audio/video channel and can implement a point-to-point connection between the user terminal and the communication network, and by transmitting the first behavior instruction data to the second user terminal via the dedicated channel, an efficient data transmission can be achieved.

In some implementations, the first session request further includes: first reconstruction capability information that indicates an information reconstruction capability of the first user terminal.

In these implementations, the first communication network is further configured to: send the first session request to a first application server, the first application server being configured to select, based on the reconstruction capability information of the first user terminal, corresponding first model data for the first user terminal, and instruct the first communication network to send a second session request to the second communication network, the second session request including first dedicated channel media information and service type indication information; and add an identification of the first model data in the session response before sending the session response to the first user terminal.

The second communication network is further configured to send the second session request to a second application server corresponding to the second user terminal, the second application server is configured to select, based on the stored reconstruction capability information of the second user terminal, corresponding second model data for the second user terminal, and instruct the second communication network to send a third session request to the second user terminal, and the third session request includes first dedicated channel media information, service type indication information, and an identification of the second model data.

The second user terminal is further configured to, after downloading the second model data through the second dedicated channel, perform feature extraction on collected second multi-dimensional image data through the second model data, convert the extracted feature information of the second multi-dimensional image data into second behavior instruction data, and send the second behavior instruction data to the second communication network through the second dedicated channel.

In these implementations, after the operation S13, the information processing method further includes: downloading the first model data through the first dedicated channel; receiving the second behavior instruction data from the first communication network through the first dedicated channel, the second behavior instruction data being transmitted from the second communication network to the first communication network; and performing information reconstruction on the second behavior instruction data based on the first model data to obtain reconstructed second multi-dimensional image data.

In these implementations, the first application server may select a corresponding model package for the user terminal based on the information reconstruction capability of the user terminal, so that the user terminal can download the model package through the dedicated channel, and perform information reconstruction on the received behavior instruction data with the downloaded model package to obtain reconstructed multi-dimensional image data.

According to the information processing method of the present application, the first user terminal performs feature extraction on collected first multi-dimensional image data, convert the extracted feature information of the first multi-dimensional image data into first behavior instruction data, and transmit the first behavior instruction data to a second user terminal via a dedicated channel, the dedicated channel is a data transmission channel established in advance based on a web real-time communication, and the second user terminal performs information reconstruction based on the first behavior instruction data to obtain reconstructed first multi-dimensional image data. In this method, the multi-dimensional image data is transmitted after being converted into behavior instruction data, which can reduce the data transmission traffic, and thus reduce the occupation of bandwidth and improve the utilization rate of the bandwidth. Furthermore, the dedicated channel, i.e., the data transmission channel established based on the web real-time communication, allows the user terminal to establish a point-to-point connection with the communication network without any intermediary, and thus, by transmitting the first behavior instruction data to the second user terminal via the dedicated channel, an efficient data transmission can be achieved.

FIG. 4 is an information processing method applied to a second user terminal according to the present application.

In a second aspect, referring to FIG. 4, the present application provides an information processing method, which is applied to a second user terminal and includes following operations S410 and S420.

At S410, receiving first behavior instruction data of a first user terminal through a dedicated channel, the dedicated channel being a data transmission channel established in advance based on a web real-time communication, and the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs.

At S420, performing information reconstruction based on the first behavior instruction data to obtain reconstructed first multi-dimensional image data.

According to the information processing method of the present application, the second user terminal receives first behavior instruction data of a first user terminal through a dedicated channel, the first behavior instruction data is obtained by the first user terminal performing feature extraction on collected first multi-dimensional image data, converting the extracted feature information of the first multi-dimensional image data into the first behavior instruction data, and is transmitted to the second user terminal via the dedicated channel, the dedicated channel is a data transmission channel established in advance based on a web real-time communication, and the second user terminal performs information reconstruction based on the first behavior instruction data to obtain reconstructed first multi-dimensional image data.

According to the information processing method, the multi-dimensional image data is transmitted after being converted into behavior instruction data, which can reduce the data transmission traffic, and thus reduce the occupation of bandwidth and improve the utilization rate of the bandwidth. Furthermore, the dedicated channel, i.e., the data transmission channel established based on the web real-time communication, allows the user terminal to establish a point-to-point connection with the communication network without any intermediary, and thus, by transmitting the first behavior instruction data to the second user terminal via the dedicated channel, an efficient data transmission can be achieved.

In some implementations, the dedicated channel includes: a first dedicated channel between the first user terminal and a first communication network, and a second dedicated channel between the second user terminal and a second communication network.

The first communication network is configured to send the first session request received from the first user terminal to a first application server, the first application server is configured to select, based on the reconstruction capability information of the first user terminal, corresponding first model data for the first user terminal, and instruct the first communication network to send a second session request to the second communication network, and the second session request includes first dedicated channel media information and service type indication information.

The second communication network is configured to send the second session request to a second application server corresponding to the second user terminal, the second application server is configured to select, based on stored reconstruction capability information of the second user terminal, corresponding second model data for the second user terminal, and instruct the second communication network to send a third session request to the second user terminal, and the third session request includes first dedicated channel media information, service type indication information, and an identification of the second model data.

Before the operation S410, the information processing method further includes: receiving the third session request from the second communication network; in response to the third session request, sending a session response to the second communication network, the session response including second dedicated channel media information of the second user terminal; and establishing the second dedicated channel with the second communication network based on the second dedicated channel media information.

In these implementations, the second user terminal can obtain, through the third session request, the first dedicated channel media information, the service type indication information, and the identification of the second model data carried in the third session request, determine a service type of a current communication based on the information carried in the third session request, and download a corresponding model packet based on the identification of the second model data; and may further enable its own dedicated channel media information, that is, the second dedicated channel media information, to be carried by the session response, and perform a communication negotiation with the first user terminal through the session response.

In some implementations, the operation S420 includes: downloading the second model data through the second dedicated channel; and performing information reconstruction on the first behavior instruction data based on the second model data to obtain reconstructed first multi-dimensional image data.

In these implementations, the second model data is downloaded through the second dedicated channel, so as to process the first behavior instruction data based on the second model data to obtain reconstructed first reconstruction data. The first dedicated channel and the second dedicated channel are different from audio/video channels. Each dedicated channel can implement a point-to-point connection between the corresponding user terminal and the communication network, and by transmitting the first behavior instruction data to the second user terminal via the dedicated channel, an efficient data transmission can be achieved.

In some implementations, the first user terminal is further configured to, in response to the session response, establish the first dedicated channel with the first communication network based on the first dedicated channel media information, and download the first model data through the first dedicated channel, and after the operation of downloading the second model data through the second dedicated channel, the information processing method further includes: performing feature extraction on collected second multi-dimensional image data, and converting the extracted feature information of the second multi-dimensional image data into second behavior instruction data; and sending the second behavior instruction data to the second communication network through the second dedicated channel, the second communication network being configured to transmit the second behavior instruction data to the first communication network so that the first communication network transmits the second behavior instruction data to the first user terminal via the first dedicated channel, and the first user terminal being configured to perform information reconstruction on the second behavior instruction data based on the first model data to obtain reconstructed second multi-dimensional image data.

In these implementations, the second user terminal may further perform feature extraction and conversion on collected second multi-dimensional image data to obtain second behavior instruction data, and transmit the second behavior instruction data to the first user terminal via a dedicated channel, so that the first user terminal performs information reconstruction on the second behavior instruction data based on a model packet corresponding to the reconstruction capability of the first user terminal to obtain reconstructed second multi-dimensional image data.

According to the information processing method of the present application, the second user terminal receives first behavior instruction data of a first user terminal through a dedicated channel, the first behavior instruction data is obtained by the first user terminal performing feature extraction on collected first multi-dimensional image data and converting the extracted feature information of the first multi-dimensional image data into the first behavior instruction data, and is transmitted to the second user terminal via the dedicated channel, the dedicated channel is a data transmission channel established in advance based on a web real-time communication, and the second user terminal performs information reconstruction based on the first behavior instruction data to obtain reconstructed first multi-dimensional image data.

According to the information processing method, the multi-dimensional image data is transmitted after being converted into behavior instruction data, which can reduce the data transmission traffic, and thus reduce the occupation of bandwidth and improve the utilization rate of the bandwidth. Furthermore, the dedicated channel, i.e., the data transmission channel established based on the web real-time communication, allows the user terminal to establish a point-to-point connection with the communication network without any intermediary, and thus, by transmitting the first behavior instruction data to the second user terminal via the dedicated channel, an efficient data transmission can be achieved.

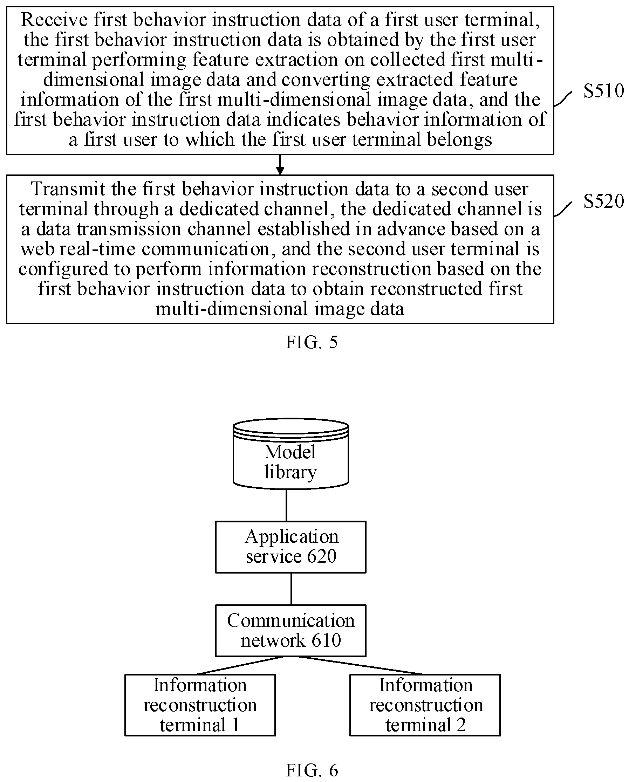

FIG. 5 is an information processing method applied to a communication system according to the present application.

In a third aspect, referring to FIG. 5, the present application provides an information transmission method, which is applied to a communication system and includes following operations S510 and S520.

At S510, receiving first behavior instruction data of a first user terminal, the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs.

At S520, transmitting the first behavior instruction data to a second user terminal through a dedicated channel, the dedicated channel being a data transmission channel established in advance based on a web real-time communication, and the second user terminal being configured to perform information reconstruction based on the first behavior instruction data to obtain reconstructed first multi-dimensional image data.

According to the information transmission method of the present application, the communication system receives first behavior instruction data of a first user terminal, and transmit the first behavior instruction data to a second user terminal through a dedicated channel, the first behavior instruction data is obtained by the first user terminal performing feature extraction on collected first multi-dimensional image data and converting the extracted feature information of the first multi-dimensional image data into the first behavior instruction data, and is transmitted to the second user terminal via the dedicated channel, the dedicated channel is a data transmission channel established in advance based on a web real-time communication, and the second user terminal performs information reconstruction based on the first behavior instruction data to obtain reconstructed first multi-dimensional image data.

In some implementations, the dedicated channel includes a first dedicated channel and a second dedicated channel, the communication system includes at least a first communication network and a second communication network, and before receiving the first behavior instruction data of the first user terminal, the information processing method further includes: S21, receiving a first session request from the first user terminal via the first communication network, the first session request including at least first dedicated channel media information of the first user terminal, and service type indication information; S22, sending, via the first communication network, the first dedicated channel media information and the service type indication information to a second communication network, the second communication network being a communication network corresponding to the identification of the second user terminal; S23, sending, via the second communication network, the first dedicated channel media information and the service type indication information to the second user terminal; S24, receiving and forwarding a session response from the second user terminal to the first communication network via the second communication network, the session response including second dedicated channel media information of the second user terminal; S25, sending, via the first communication network, the second dedicated channel media information to the first user terminal, and establishing the first dedicated channel with the first user terminal based on the first dedicated channel media information; S26, establishing the second dedicated channel with the second user terminal by the second communication network based on the second dedicated channel media information.

In these implementations, the first dedicated channel between the first user terminal and the first communication network, and the second dedicated channel between the second user terminal and the second communication network, are established, the first dedicated channel and the second dedicated channel are different from audio/video channels, can implement a point-to-point connection between the user terminal and the communication network, and by transmitting the first behavior instruction data to the second user terminal via the dedicated channel, an efficient data transmission can be achieved.

In some implementations, the communication system further includes a first application server and a second application server, the operation S22 includes: sending, via the first communication network, the first session request to the first application server, the first session request further including reconstruction capability information of the first user terminal; selecting, by the first application server based on the reconstruction capability information of the first user terminal, corresponding first model data for the first user terminal, and instructing the first communication network to send a second session request to the second communication network, the second session request including first dedicated channel media information and service type indication information.

In these implementations, the operation S23 includes: sending, via the second communication network, the second session request to the second application server; and selecting, by the second application server based on stored reconstruction capability information of the second user terminal, corresponding second model data for the second user terminal, and instructing the second communication network to send a third session request to the second user terminal, the third session request including first dedicated channel media information, service type indication information, and an identification of the second model data.

In these implementations, the operation S25 includes: adding an identification of the first model data in the session response via the first communication network; and sending the session response carrying the identification of the first model data and the second dedicated channel media information to the first user terminal.

In these implementations, the first application server is configured to select, based on the reconstruction capability information of the first user terminal, corresponding model data for the first user terminal, and the second application server is configured to select, based on the reconstruction capability information of the second user terminal, corresponding model data for the second user terminal for subsequently performing information reconstruction on the behavior instruction data received from the communication peer.

In some implementations, the operation S520 of transmitting the first behavior instruction data to the second user terminal through the dedicated channel includes: sending the first behavior instruction data received through the first dedicated channel to the second communication network; and in the second communication network, sending the first behavior instruction data to the second user terminal through the second dedicated channel.

In these implementations, the dedicated channel includes the first dedicated channel, the first communication network, the second communication network and the second dedicated channel, and an efficient transmission of the behavior instruction data is achieved based on the dedicated channel.

In some implementations, after the operation S26, the information processing method further includes: receiving, in the second communication network, second behavior instruction data from the second user terminal through the second dedicated channel, the second behavior instruction data being obtained by the second user terminal performing feature extraction on collected second multi-dimensional image data and converting extracted feature information of the second multi-dimensional image data based on the second model data, and being transmitted to the first communication network via the second communication network; and sending, in the first communication network, the second behavior instruction data to the first user terminal through the first dedicated channel, the first user terminal being configured to perform information reconstruction on the second behavior instruction data based on the first model data to obtain reconstructed second multi-dimensional image data.

In these implementations, the second user terminal performs feature extraction and conversion on the collected second multi-dimensional image data to obtain second behavior instruction data, and transmit the second behavior instruction data to the first user terminal via the dedicated channel, so that the first user terminal performs information reconstruction on the second behavior instruction data based on the model packet corresponding to the reconstruction capability of the first user terminal to obtain reconstructed second multi-dimensional image data.

FIG. 6 is a schematic diagram of an exemplary architecture of a communication system according to the present application. Taking a communication system corresponding to a terminal at a side of a communication as an example, as shown in FIG. 6, the communication system may include: a communication network 610 and an application service 620. The application scene of the communication system further includes: an information reconstruction terminal 1 (first user terminal) and an information reconstruction terminal 2 (second user terminal).

The communication network 610 is configured to support a negotiation for a newly added dedicated channel (which is different from an audio/video channel), and further support an authentication for an access of a terminal, addressing between terminals and between the terminal and an application server, and a transmission of behavior instruction data. The application service 620 is configured to add a model management function, including storage, addition, update, deletion, and the like of an information model and a reconstruction model. During establishing a communication, by supporting the negotiation for a newly added dedicated channel, and selecting corresponding model packages for different types of terminals, one-to-many forwarding of a behavior instruction can be implemented.

In FIG. 6, the first user terminal and the second user terminal may share a communication network, or in a practical application scene, the first user terminal and the second user terminal may use different communication networks.

The following describes procedures of the information processing method and the information transmission method provided in the present application with reference to FIG. 6.

In some implementations, the information processing method and the information transmission method may include following operations S701 to S723.

In S701, a first user terminal sends a first session request to a communication network of a first user.

The first session request includes dedicated channel media information of the first user terminal, a certain indication of a type of a call service, a feature of a information reconstruction capability for supporting information reconstruction, and the like, the certain indication of the type of the call service is information indicating the type of the service, such as a holographic communication service, a VR communication service, an AR communication service, and the like.

In S702, the first communication network receives the first session request, and reports the first session request to the first application server based on the certain indication of the type of the call service in the first session request.

The first application server is a server corresponding to the application service of the first user, and a type of the application service corresponds to the type of the service.

In S703, the first application server selects corresponding model data for the first user terminal by analyzing the information reconstruction capability of the first user terminal in the first session request.

Illustratively, the information reconstruction capability includes at least one of: a capability of imaging, a capability of a GPU, a size of a screen, and the like, and the model data is subsequently used for instructing the first user terminal to use the model data for information generation and information reconstruction.

In S704, the first application server instructs the first communication network to continue calling, with an instruction carrying the dedicated channel media information and the certain indication of the type of the call service.

In this operation, the first application server may instruct the first communication network to continue calling through a second session request, the second session request carries the dedicated channel media information and the certain indication of the type of the call service, i.e., the feature of the information reconstruction capability of the first user terminal is removed.

In S705, the first communication network sends the session request to the second communication network based on identification information of the second user terminal.

In this operation, the identification information of the second user terminal may be a user number, for example, includes, but not limited to, at least one of an international mobile subscriber identity (IMSI) or a mobile station international subscriber directory number (MSISDN) of the user. The first communication network may be connected to a network corresponding to the identification information based on the identification information of the second user terminal.

In S706, the second communication network receives the session request, and reports the session information to the second application server based on the certain indication of the type of the call service in the session request.

In S707, the second application server selects corresponding model data for the second user terminal based on the information reconstruction capability of the second user terminal, to instruct the second user terminal to use the model data for information generation and information reconstruction.

In S708, the second application server instructs the second communication network to continue calling, with an instruction carrying the dedicated channel media information, the certain indication of the type of the call service, and an identification of the second model data.

In this operation, the second application server may instruct the second communication network to continue calling through a third session request, the third session request carries the certain indication of the type of the call service, and the identification of the model data for information generation and information reconstruction.

In S709, the second communication network sends the session request to the second user terminal based on the identification information of the second user terminal.

In this operation, the identification information of the second user terminal may be a user number, for example, includes, but not limited to, at least one of an IMSI or an MSISDN of the user.

In S710, the second user terminal determines, based on the information in the session request, such as the dedicated channel media information, the certain indication of the type of the call service, and the identification of the model data for information generation and information reconstruction, that a function of information generation and reconstruction is to be used and thus performs an initialization of a related capability of the terminal.

In this operation, the initialization may include, for example, an initialization of an information generation function, an initialization of an information reconstruction function, and the like.

In S711, the second user terminal returns a session response to the second communication network, the session response carrying local dedicated channel media information (i.e., the dedicated channel media information of the second user terminal).

In S712, the second communication network forwards the session response to the first communication network.

In S713, the first communication network inserts the identification of the model data to be used by the first user terminal for information generation and information reconstruction into the session response, and forwards the session response to the first user terminal.

In S714, after receiving the session response, the first user terminal establishes a dedicated channel with the first communication network and downloads the certain model data through the dedicated channel.

In S715, after determining that the first user terminal has received the session response, the second user terminal establishes a dedicated channel with the second communication network and downloads the certain model data through the dedicated channel.

In S716, the second user terminal collects information with hardware of the terminal, generates information with the downloaded model data, and sends the behavior instruction data of the second user to the second communication network through the dedicated channel.

In S717, the second communication network forwards the behavior instruction data of the second user to the first communication network through the dedicated channel.

In S718, the first communication network forwards the behavior instruction data of the second user to the first user terminal through the dedicated channel.

In S719, the first user terminal reconstructs the behavior instruction data of the second user with the downloaded model data, and presents the reconstructed data on the first user terminal.

In S720, the first user collects information with hardware of the terminal, generates information with the downloaded model data, and sends the behavior instruction data of the first user to the first communication network through the dedicated channel.

In S721, the first communication network forwards the behavior instruction data of the first user to the second communication network through the dedicated channel.

In S722, the second communication network forwards the behavior instruction data of the first user to the second user terminal through the dedicated channel.

In S723, the second user terminal reconstructs the behavior instruction data of the first user with the downloaded model data, and presents the reconstructed data on the second user terminal.

Through the operations S701 to S723, a real-time communication of three-dimensional information can be realized based on an information reconstruction manner.

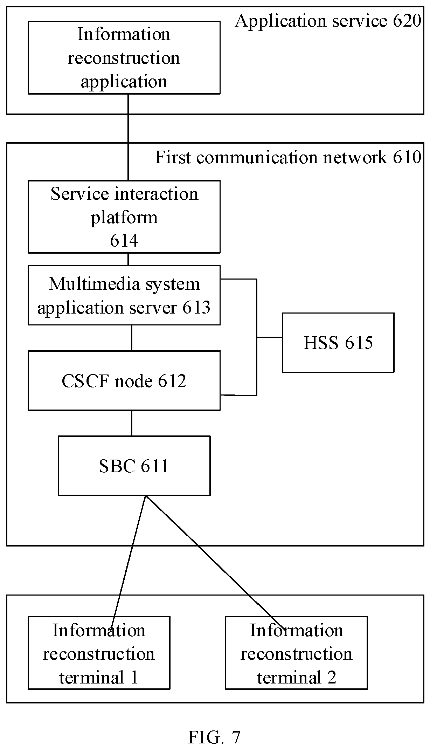

FIG. 7 is a schematic diagram of an exemplary detailed architecture of a communication system according to the present application. The same or equivalent structures in FIGs. 7 and 6 are denoted by the same reference numerals. As shown in FIG. 7, in the first communication system, the first communication network 610 includes: a session border controller (SBC) 611, an interrogation call session control function (CSCF) node 612, a multimedia system application server 613, and a service interaction platform 614.

The session border controller 611 may serve as an access module in an IP multimedia system (IMS), to be configured to provide an access service to an information reconstruction terminal, such as the first user terminal, the second user terminal, and the like, and can support an establishment of a dedicated channel and forwarding of behavior instruction data.

The call session control function node 612 may serve as a session control and routing module in the IMS, to provide an interrogation call session control function (I-CSCF) and a serving call session control function (S-CSCF). A main function of the I-CSCF include at least one of: allocating one S-CSCF for a user during the user registering, or sending a session to an S-CSCF registered by the user or a specified S-CSCF in a service flow. A main function of the S-CSCF include at least one of: providing registration and authentication for a mobile phone or an AR device; providing a session initiation protocol (SIP) session management, including session establishment, session refresh, session release, session maintenance, emergency call, message management, and the like; or providing a service triggering function, to trigger a call to a corresponding multimedia system application server. The multimedia system application server may be, for example, a voice over long-term evolution application server (VoLTE AS).

The multimedia system application server 613 may be, for example, a VoLTE AS, and a multimedia system application, as an application service in the IMS, may provide functions such as basic supplementary services, call continuity, and the like. In some implementations, the VoLTE AS reports a call event to the service interaction platform 614, receives a control instruction issued by the service interaction platform 614, and implements a management, such as at least one of establishment, modification or deletion, of a dedicated data channel.

The service interaction platform 614 provides a unified service portal for applications and terminals, and the function thereof includes at least one of: providing a subscription to a user registration event or a call event; providing automatic addressing for different services; providing a control capability for signaling during a call, including but not limited to setting up or continuing the call, rejecting the call, playing sound to the terminal, and the like; providing a control capability for media during a call, including but not limited to anchoring audio/video media of a terminal to a media plane, anchoring a dedicated data channel of the terminal to the media plane, and performing a management, such as at least one of establishment, modification, or deletion, on an audio/video media channel and the dedicated data channel; or providing a control capability for forwarding of behavior instruction data.

As shown in FIG. 7, the communication system may further include: a home subscriber server (HSS) 615, which may be configured to store authentication information of a user, certain information of a subscriber, dynamic information of the subscriber, and the like, cooperate with the CSCF to complete registration and authentication of the information reconstruction terminal, and provide a storage for transparent data of a service for the VoLTE AS.

In some implementations, the first communication network includes a first session border controller, a first call session control function node, a first multimedia system application server, and a first service interaction platform, which are sequentially connected. The first session border controller is connected to the first user terminal, and the first service interaction platform is connected to the first application server. The second communication network includes a second session border controller, a second call session control function node, a second multimedia system application server, and a second service interaction platform, which are sequentially connected. The second session border controller is connected to the second user terminal, and the second service interaction platform is connected to the second application server. Furthermore, the first call session control function node is connected to the second multimedia system application server for a communication transport from the first communication network to the second communication network; and the second call session control function node is connected to the first multimedia system application server for a communication transport from the second communication network to the second communication network.

In these implementations, in the communication network, the first communication network implements functions of the communication network through the first session border controller, the first call session control function node, the first multimedia system application server, and the first service interaction platform.

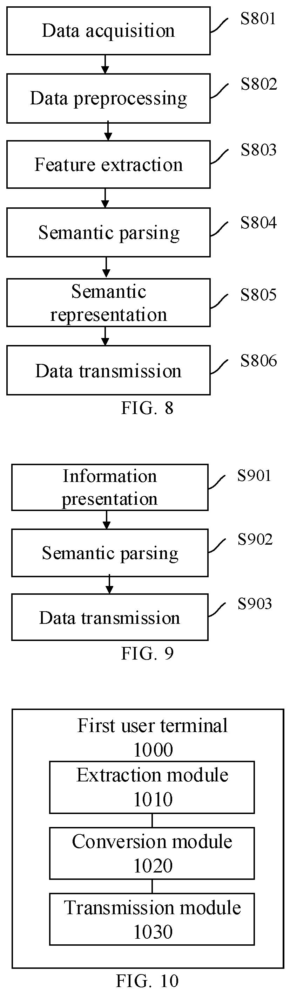

FIG. 8 is an exemplary flowchart of an information processing method applied to a first user terminal according to the present application.

As shown in FIG. 8, the information processing method may include following operations S801 to S806.

S801 includes data acquisition.

In this operation, the first user terminal acquires data to be transmitted in a holographic communication, e.g., a holographic image, related sensor data and the like, via hardware facilities.

S802 includes data preprocessing.

In this operation, the first user terminal performs preprocessing, including image denoising, image alignment, attitude correction, motion compensation, and the like, on the acquired data, to improve quality and usability of the data.

S803 includes feature extraction.

In this operation, the first user terminal extracts feature information in the holographic image, such as color, shape, texture, depth, and the like, from the preprocessed data.

S804 includes semantic parsing.

In this operation, the first user terminal matches and parses the extracted feature information with the semantic knowledge base to obtain semantic information. The semantic knowledge base may include knowledge in the holographic field, such as entities, relationships, events, and the like.

S805 includes semantic representation.

In this operation, the first user terminal represents and stores the parsed semantic information to obtain corresponding behavior instruction data, for example, the left eye blinking 3 times, with each time of blinking lasting for 50 milliseconds, and the like.

S806 includes data transmission.

In this operation, the first user terminal establishes a session with the communication network, and transmits information data subjected to the semantic representation, that is, behavior instruction data obtained by the semantic representation, to a remote device, for example, the second user terminal.

Through the operations S801 to S806, any user terminal can convert the acquired data for a holographic communication into corresponding behavior instruction data, and transmit the behavior instruction data to the second user terminal, thereby implementing information reconstruction at the second user terminal.

FIG. 9 is an exemplary flowchart of an information processing method applied to a second user terminal according to the present application.

As shown in FIG. 9, the information processing method may include following operations S901 to S903.

S901 includes information presentation.

In this operation, the second user terminal may establish a session with the communication network, and receive the behavior instruction data delivered in the communication network, i.e., the behavior instruction data semantically represented.

S902 includes semantic parsing.

In this operation, the second user terminal matches and parses the received information data with the semantic knowledge base to obtain semantic information corresponding to a behavior instruction to be presented, for example, the left eye blinking 3 times, with each time of blinking lasting for 50 milliseconds.

S903 includes data transmission.

In this operation, the second user terminal loads a corresponding data model based on the semantic information, applies the semantic information to an existing scene, and presents information such as sound, images and the like on the second user terminal by means of the hardware capability of the terminal.

Through the operations S901 to S903, the second user terminal can receive first behavior instruction data of a first user terminal through a dedicated channel, and perform information reconstruction based on the first behavior instruction data to obtain reconstructed first multi-dimensional image data.

The following describes a process in which two user terminals of a same type supporting a holographic communication, interact in the information processing method and the information transmission method of the present application, by taking the holographic communication being implemented in an IMS network, and a first user terminal and a second user terminal haring the same IMS network as an example. It will be appreciated that the first user terminal and the second user terminal may share the same IMS network, or use different IMS networks, which correspond to a same processing flow. In some implementations, the information processing method and the information transmission method include the operations of S1001 to S1031.

In S1001, the first user terminal sends an INVITE request to the SBC, the INVITE request carrying dedicated channel media information of the first user terminal, a holographic communication service indication, and information of a capability of the terminal.

Illustratively, the holographic communication service indication may be implemented by adding a holographic communication media label in a media line (m=line) of an application layer session description protocol (SDP) of a multimedia session.
m=application 10000 UDP/DTLS/SCTP webrtc-datachannel
a=dcmap: 1002 label="holo"

In a WebRTC, a user datagram protocol (UDP), a datagram transport layer security (DTLS), or a stream control transmission protocol (SCTP) is used to implement a point-to-point message communication through a data channel (DataChannel).

Each media level section starts with an "m=" line, proceeding to a next media level section or an end of the session.

Illustratively, the capability of the terminal includes at least one of a capability of a graphics processing unit (GPU), a capability of three-dimensional (3D) rendering, a size of a screen, a resolution, a capability of multi-dimensionally collecting, or the like.

In S1002, the SBC forwards the INVITE request to the S-CSCF.

In S1003, the S-CSCF forwards the INVITE request to the VoLTE AS.

In S1004, the VoLTE AS reports a call event to the service interaction platform, with carrying the dedicated channel media information of the first user terminal, the holographic communication service indication, and the information of the capability of the terminal.

In S1005, according to the holographic communication service indication, the service interaction platform reports the call event to an information reconstruction application server corresponding to the first user terminal.

In S 1006, upon receiving the request, the information reconstruction application server corresponding to the first user terminal selects a model packet 1 for the first user terminal based on the information of the capability of the first user terminal.

An example of contents in the model package 1 is shown in table 1 below.

**Table 1 Contents in Model Package**

| User ID | Type of Terminal | Capability of Terminal | Model Package ID |
|---|---|---|---|
| First user | TV | Supportting a holographic communication, a size of a screen being 1, processing capacity of GPU being 1, capability of projecting being 1 | Model package 1 |

Illustratively, the model package, such as the model package 1, includes a data analysis model, a data presentation model, a semantic model, a behavior data model, and the like, and corresponding information is recorded in the system. As an example, the data analysis model is configured to parse corresponding behavior instruction data to obtain description information of an entity behavior; the semantic model is configured to determine semantic information corresponding to the description information of the entity behavior; the behavior data model may be configured to convert the corresponding semantic information into feature information of the corresponding behavior; and the data presentation model is configured to present the feature information as the corresponding behavior.

In S1007, the application server corresponding to the first user terminal instructs the service interaction platform to continue calling, with carrying the dedicated channel media information of the first user terminal and the holographic communication service indication.

In S1008, the service interaction platform instructs the VoLTE AS to continue calling.

In S1009, the VoLTE AS forwards the INVITE request to the I/S-CSCF.

In S1010, according to identification information of the second user terminal, the I/S-CSCF forwards the INVITE session request to the VoLTE AS of the second user terminal.

In S1011, the VoLTE AS corresponding to the second user terminal reports a call event to the service interaction platform, with carrying the holographic communication service indication and information of a capability of the terminal.

In S1012, based on the holographic communication service indication, the service interaction platform corresponding to the second user terminal reports the call event to an information reconstruction application server corresponding to the second user terminal.

In S1013, upon receiving the request, the information reconstruction application server corresponding to the second user terminal selects a model packet 1 for the second user terminal based on the information of the capability of the second user terminal.

An example of contents in the model package 1 is shown in table 2 below.

**Table 2 Contents in Model Package**

| User ID | Type of Terminal | Capability of Terminal | Model Package ID |
|---|---|---|---|
| Second user | TV | Supporting a holographic communication, a size of a screen being 1, processing capacity of GPU being 1, capability of projecting being 1 | Model package 1 |

As can be seen from tables 1 and 2, the first user terminal and the second user terminal have the same information of capability, and thus correspond to a same model package.

In table 2, the model package 1 includes a data analysis model, a data presentation model, a semantic model, a behavior data model, and the like, and corresponding information is recorded in the system.

In S1014, the application server corresponding to the second user terminal instructs the service interaction platform to continue calling.

In S1015, the service interaction platform instructs the VoLTE AS to continue calling.

In S1016, the VoLTE AS forwards the INVITE request to the I/S-CSCF, the INVITE request carrying holographic communication service indication, media description and model packet identification information.

For example, a holo label, which represents a holographic communication service, is carried in the SDP, and a model package identification is included in "package".
m=application 10000 UDP/DTLS/SCTP webrtc-datachannel
a=dcmap: 1002 label="holo"
a=package: 1

In S1017, the I/S-CSCF sends the INVITE request to an SBC registered by the second user terminal.

In S1018, the SBC registered by the second user terminal forwards the INVITE request to the second user terminal.

In S1019, upon receiving the INVITE call request, the second user terminal performs a preparation work for a holographic communication, including but not limited to initializing a presentation device, a function of a graphics processing unit (GPU), and the like, according to the holographic communication service indication in the call request.

In S1020, the second user terminal returns a 183 response to the SBC corresponding to the second user terminal.

In S1021, the SBC corresponding to the second user terminal forwards the 183 response to the S-CSCF.

At S1022, the S-CSCF forwards the response to the VoLTE AS, and the VoLTE AS interacts with a media resource function (MRF) to create a dedicated channel.

In S1023, the second user terminal downloads data of the model package 1 through the dedicated channel.

In S1024, the VoLTE AS corresponding to the second user terminal sends the 183 response to the I/S-CSCF, the 183 response carrying media and network information (including an IP address, a port number and the like) of the second user terminal.

In S1025, the I/S-CSCF forwards the 183 response to the VoLTE AS corresponding to the first user terminal.

In S1026, the VoLTE AS corresponding to the first user terminal inserts model packet identification information corresponding to the first user terminal into the 183 response, and forwards the 183 response to the I/S-CSCF. For example, an attribute a=package is added in an m line in the SDP to indicate information of the model package.
m=application 10000 UDP/DTLS/SCTP webrtc-datachannel
a=dcmap: 1002 lable="holo"
a=package: 1

In S1027, the I/S-CSCF forwards a 18x response to the SBC where the first user terminal is registered.

In S1028, the SBC forwards the 18x response to the first user terminal.

In S1029, by using media information in the 18x response, the first user terminal establishes a connection with the first user application server, and downloads data of the model package 1 through the dedicated channel.

In S1030, the first user terminal and the second user terminal complete a subsequent precondition procedure of the IMS.

The precondition process includes: reserving network resources before the session is established.

In S1031, after the second user terminal answers the call, the second user terminal returns a 200 OK response to the first user terminal through the IMS network, and the first user terminal establishes a media path with the second user terminal.

In some implementations, the user data may be relayed through the application server or not. After receiving the user data of the second user terminal, the first user terminal generates holographic presentation contents by using the model package 1. After receiving the user data of the first user terminal, the second user terminal generates holographic presentation contents by using the model package 1.

Through the above operations, the first user terminal and the second user terminal complete the process of the holographic communication.

The following describes a process in which two user terminals of different types supporting a holographic communication interact in the information processing method and the information transmission method of the present application, by taking the holographic communication being implemented in an IMS network, and a first user terminal and a second user terminal sharing the same IMS network as an example. It will be appreciated that the first user terminal and the second user terminal may share the same IMS network, or use different IMS networks, which correspond to a same processing flow. In some implementations, the information processing method and the information transmission method include following operations S1101 to S1131.

In S1101, the first user terminal sends an INVITE request to the SBC, the INVITE request carrying dedicated channel media information of the first user terminal, holographic communication service indication, and information of a capability of the terminal .

In this operation, the information of the capability of the terminal can reflect characteristics of the corresponding user terminal.

Illustratively, the holographic communication service indication may be implemented by: adding a holographic communication media label in a media line (m=line) of an SDP.
m=application 10000 UDP/DTLS/SCTP webrtc-datachannel
a=dcmap: 1002 label="holo"

The content of the holographic communication media label may be customized as desired, and is not limited in the present application.

In S1102, the SBC forwards the INVITE request to the S-CSCF.

In S1103, the S-CSCF forwards the INVITE request to the VoLTE AS.

In S1104, the VoLTE AS reports a call event to the service interaction platform, with carrying the holographic communication service indication and characteristics of the terminal.

In S1105, according to the holographic communication service indication, the service interaction platform reports the call event to an information reconstruction application server corresponding to the first user terminal.

In S1106, upon receiving the request, the information reconstruction application server corresponding to the first user terminal selects a model packet 1 for the first user terminal based on the information of the capability of the first user terminal.

The contents of the model package 1 may be referred to the above table 1, and is not repeated here.

In S1107, the application server corresponding to the first user terminal instructs the service interaction platform to continue calling.

In S1108, the service interaction platform instructs the VoLTE AS to continue calling.

In S1109, the VoLTE AS forwards the INVITE request to the I/S-CSCF.

In S1110, according to the identification information of the second user terminal, the I/S-CSCF forwards the INVITE session request to the VoLTE AS corresponding to the second user terminal.

In S1111, the VoLTE AS corresponding to the second user terminal reports a call event to the service interaction platform, with carrying the holographic communication service indication and characteristics of the terminal.

In S1112, based on the holographic communication service indication, the service interaction platform corresponding to the second user terminal reports the call event to an information reconstruction application server corresponding to the second user terminal.

In S1113, upon receiving the request, the information reconstruction application server corresponding to the second user terminal selects a model packet 2 for the second user terminal based on the information of the capability of the second user terminal.

An example of contents in the model package 3 is shown in table 3 below.

**Table 3 Contents in Model Package**

| Use r ID | Type of Terminal | Capability of Terminal | Model Package ID |
|---|---|---|---|
| Sec ond user | Mobile phone | Supporting a holographic communication, a size of a screen being 2, processing capacity of GPU being 2, capability of projection being 2 | Model package 2 |

The model package 2 includes a data analysis model, a data presentation model, a semantic model, a behavior data model, and the like, and corresponding information is recorded in the system.

In S1114, the application server corresponding to the second user terminal instructs the service interaction platform to continue calling, with carriying the dedicated channel media information of the first user terminal and the holographic communication service indication.

In S1115, the service interaction platform instructs the VoLTE AS to continue calling.

In S1116, the VoLTE AS forwards the INVITE request to the I/S-CSCF, the INVITE request carrying holographic communication service indication, media description and model packet identification information.

For example, a holo label, which represents a holographic communication service, is carried in the SDP, and a model package identification is included in "package".
m=application 10000 UDP/DTLS/SCTP webrtc-datachannel
a=dcmap: 1002 label="holo"
a=package: 2

package: 2 represents that the model package is the model package 2.

In S1117, the I/S-CSCF sends the INVITE request to an SBC registered by the second user terminal.

In S1118, the SBC registered by the second user terminal forwards the INVITE request to the second user terminal.

In S1119, upon receiving the INVITE call request, the second user terminal performs a preparation work for a holographic communication, including but not limited to initializing a presentation device, a function of a graphics processing unit (GPU), and the like, according to the holographic communication service indication in the call request.

In S1120, the second user terminal returns a 183 response to the SBC corresponding to the second user terminal.

In S1121, the SBC corresponding to the second user terminal forwards the 183 response to the S-CSCF.

In S1122, the S-CSCF forwards the response to the VoLTE AS, and the VoLTE AS interacts with a media resource function (MRF) to establish a dedicated channel with the second user terminal.

In S1123, the second user terminal downloads data of the model package 2 through the dedicated channel.

In S1124, the VoLTE AS corresponding to the second user terminal sends the 183 response to the I/S-CSCF, the 183 response carrying media and network information (including an IP address, a port number and the like) of the second user terminal.

In S1125, the I/S-CSCF forwards the 183 response to the VoLTE AS corresponding to the first user terminal.

In S1126, the VoLTE AS corresponding to the first user terminal inserts model packet identification information corresponding to the first user terminal into the 183 response, and forwards the 183 response to the I/S-CSCF. For example, an attribute a=package is added in an m line in the SDP to indicate information of the model package.
m=application 10000 UDP/DTLS/SCTP webrtc-datachannel
a=dcmap: 1002 lable="holo"
a=package: 1

In S1127, the I/S-CSCF forwards a 18x response to the SBC where the first user terminal is registered.

In S1128, the SBC forwards the 18x response to the first user terminal.

In S1129, by using media information in the 18x response, the first user terminal establishes a connection with the first user application server, and downloads data of the model package 1 through the dedicated channel.

In S1130, the first user terminal and the second user terminal complete a subsequent precondition procedure of the IMS.

In S1131, after the second user terminal answers the call, the second user terminal returns a 200 OK response to the first user terminal through the IMS network, and the first user terminal establishes a media path with the second user terminal.

In some implementations, the user data may be relayed through the application server or not. After receiving the user data of the second user terminal, the first user terminal generates holographic presentation contents by using the model package 1. After receiving the user data of the second user terminal, the second user terminal generates holographic presentation contents by using the model package 2.

Through the above operations, the first user terminal and the second user terminal complete the process of the holographic communication.

The following describes a process in which a user terminal supporting a holographic communication and another user terminal not supporting the holographic communication interact, by taking the holographic communication being implemented in an IMS network, and a first user terminal and a second user terminal sharing the same IMS network as an example. It will be appreciated that the first user terminal and the second user terminal may share the same IMS network, or use different IMS networks, which correspond to a same processing flow. In some implementations, the method includes following operations S1201 to S1228.

In S1201, the first user terminal sends an INVITE request to the SBC, the INVITE request carrying dedicated channel media information of the first user terminal, holographic communication service indication, and information of a capability of the terminal.

Illustratively, the holographic communication service indication may be implemented by adding a holographic communication media label in a media line (m=line) of an SDP.
m=application 10000 UDP/DTLS/SCTP webrtc-datachannel
a=dcmap: 1002 label="holo"

Illustratively, the capability of the terminal includes at least one of a capability of a graphics processing unit (GPU), a capability of three-dimensional (3D) rendering, a size of a screen, a resolution, a capability of multi-dimensionally collecting, or the like.

In S1202, the SBC forwards the INVITE request to the S-CSCF.

In S1203, the S-CSCF forwards the INVITE request to the VoLTE AS.

In S1204, the VoLTE AS reports a call event to the service interaction platform, with carrying the dedicated channel media information of the first user terminal, the holographic communication service indication and the information of the capability of the terminal.

In S1205, according to the holographic communication service indication, the service interaction platform reports the call event to an information reconstruction application server corresponding to the first user terminal.

In S1206, upon receiving the request, the information reconstruction application server corresponding to the first user terminal selects a model packet 1 for the first user terminal based on the information of the capability of the first user terminal.

In S1207, the application server corresponding to the first user terminal instructs the service interaction platform to continue calling.

In S1208, the service interaction platform instructs the VoLTE AS to continue calling.

In S1209, the VoLTE AS forwards the INVITE request to the I/S-CSCF.

In S1210, according to the identification information of the second user terminal, the I/S-CSCF forwards the INVITE session request to the VoLTE AS corresponding to the second user terminal.

In S1211, the VoLTE AS corresponding to the second user terminal reports a call event to the service interaction platform, with carrying the holographic communication service indication and the information of the capability of the terminal.

In S1212, based on the holographic communication service indication, the service interaction platform corresponding to the second user terminal reports the call event to an information reconstruction application server corresponding to the second user terminal.

In S1213, upon receiving the request, the information reconstruction application server corresponding to the second user terminal determines that the characteristics of the second user terminal do not support a holographic communication, and instructs the service interaction platform to delete the dedicated channel before continuing the call.

In S1214, the service interaction platform indicates the VoLTE AS to delete the dedicated channel before continuing the call.

In S1215, the VoLTE AS forwards the INVITE request to the I/S-CSCF, the INVITE request not carrying holographic communication service indication, media description and model packet identification information. For example, the information corresponding to the holographic communication is deleted in the SDP.

The deleted information corresponding to the holographic communication includes: "m=application 10000 UDP/DTLS/SCTP webrtc-datachannel
a=dcmap: 1002 label="holo"
a=package: 2".

In S1216, the I/S-CSCF sends the INVITE request to an SBC registered by the second user terminal.

In S1217, the SBC registered by the second user terminal forwards the INVITE request to the second user terminal.

In S1218, upon receiving the INVITE call request, the second user terminal prepares resources for a basic call being not a holographic communication.

In S1219, the second user terminal returns a 183 response to the SBC corresponding to the second user terminal.

In S1220, the SBC corresponding to the second user terminal forwards the 183 response to the S-CSCF.

In S1221, the S-CSCF forwards the response to the VoLTE AS.

In S1222, the VoLTE AS corresponding to the second user terminal sends the 183 response to the I/S-CSCF, with a port number of holographic media being set to 0, which indicates "unavailable".

m=application 0 UDP/DTLS/SCTP webrtc-datachannel

In S1223, the I/S-CSCF forwards the 183 response to the VoLTE AS corresponding to the first user terminal.

In S1224, the VoLTE AS corresponding to the first user terminal determines that the second user terminal does not support a holographic communication, and does not insert model packet identification information corresponding to the first user terminal into the 183 response, and forward the 183 response to the I/S-CSCF.

In S1225, the I/S-CSCF forwards a 18x response to the SBC where the first user terminal is registered.

In S1226, the SBC forwards the 18x response to the first user terminal.

In S1227, the first user terminal and the second user terminal complete a subsequent precondition procedure of the IMS.

In S1228, after the second user terminal answers the call, the second user terminal returns a 200 OK response to the first user terminal through the IMS network, and the first user terminal establishes a conventional audio/video media path with the second user terminal.

Through the above operations, a conventional audio/video calling process between a user terminal supporting a holographic communication and a user terminal not supporting a holographic communication is completed.

FIG. 10 is a schematic structural diagram of a first user terminal according to the present application.

In a fourth aspect, referring to FIG. 10, the present application provides a first user terminal 1000, including: an extraction module 1010 configured to perform feature extraction on collected first multi-dimensional image data to obtain feature information of the first multi-dimensional image data; a conversion module 1020 configured to convert the feature information into first behavior instruction data that indicates behavior information of a first user to which the first user terminal belongs; and a transmission module 1030 configured to transmit the first behavior instruction data to a second user terminal via a dedicated channel. The dedicated channel is a data transmission channel established in advance based on a web real-time communication, and the second user terminal is configured to perform information reconstruction based on the first behavior instruction data to obtain reconstructed first multi-dimensional image data.

In some implementations, the first multi-dimensional image data includes multi-dimensional image data, and the feature information is a multi-dimensional image data feature, the extraction module 1010 is configured to preprocess multi-dimensional image data collected by an image sensor by at least one of image denoising, image alignment, attitude correction or motion compensation, and perform feature extraction on the preprocessed multi-dimensional image data to obtain a multi-dimensional image data feature.

In some implementations, the conversion module 1020 is configured to match the feature information with a semantic knowledge base to obtain semantic information corresponding to the feature information, the semantic information including description information of an entity behavior, and convert the description information of the entity behavior into corresponding first behavior instruction data.

In some implementations, the dedicated channel includes a first dedicated channel between the first user terminal and a first communication network, and a second dedicated channel between the second user terminal and a second communication network., the first user terminal 1000 further includes: a sending module configured to, before transmitting the first behavior instruction data to the second user terminal via the dedicated channel, send a first session request to the first communication network corresponding to the first user terminal, the first session request including at least first dedicated channel media information of the first user terminal and service type indication information, and the first communication network being configured to forward, via the second communication network corresponding to the second user terminal, the first dedicated channel media information and the service type indication information to the second user terminal; and a receiving module configured to receive, via the first communication network, a session response from the second user terminal forwarded by the second communication network, the session response being generated and sent to the second communication network by the second user terminal after receiving the first dedicated channel media information and the service type indication information, and the session response including second dedicated channel media information of the second user terminal, the first communication network being further configured to forward the session response to the first user terminal, and the second communication network being further configured to establish the second dedicated channel with the second user terminal based on the received second dedicated channel media information; and an establishment module configured to establish, in response to the session response, the first dedicated channel with the first communication network based on the first dedicated channel media information.

In some implementations, the transmission module 1030 is configured to send the first behavior instruction data to the first communication network through the first dedicated channel, the first communication network is configured to send the first behavior instruction data to the second communication network, and the second communication network is configured to send the first behavior instruction data to the second user terminal through the second dedicated channel.

In some implementations, the first session request further includes first reconstruction capability information that indicates an information reconstruction capability of the first user terminal, the first communication network is further configured to: send the first session request to a first application server, the first application server being configured to select, based on the reconstruction capability information of the first user terminal, corresponding first model data for the first user terminal, and instruct the first communication network to send a second session request to the second communication network, the second session request including first dedicated channel media information and service type indication information; and add an identification of the first model data in the session response before sending the session response to the first user terminal; the second communication network is further configured to send the second session request to a second application server corresponding to the second user terminal, the second application server is configured to select, based on the stored reconstruction capability information of the second user terminal, corresponding second model data for the second user terminal, and instruct the second communication network to send a third session request to the second user terminal, the third session request includes the first dedicated channel media information, the service type indication information and an identification of the second model data; the second user terminal is further configured to, after downloading the second model data through the second dedicated channel, perform feature extraction on the collected second multi-dimensional image data through the second model data, convert the extracted feature information of the second multi-dimensional image data into second behavior instruction data, and send the second behavior instruction data to the second communication network through the second dedicated channel.

The first user terminal 1000 further includes: a download module configured to, after establishing the first dedicated channel with the first communication network based on the first dedicated channel media information, download the first model data through the first dedicated channel, the receiving module being further configured to receive the second behavior instruction data from the first communication network through the first dedicated channel, the second behavior instruction data being transmitted from the second communication network to the second communication network; and an information reconstruction module configured to perform information reconstruction on the second behavior instruction data based on the first model data to obtain reconstructed second multi-dimensional image data.

It should be noted that the present application is not limited to the configurations and processing described above and shown in the figures. For convenience and simplicity of description, detailed description of any known method is omitted here, and for the working processes of the system, the modules and the units described above, reference may be made to corresponding processes in the foregoing method, which are not repeated here.

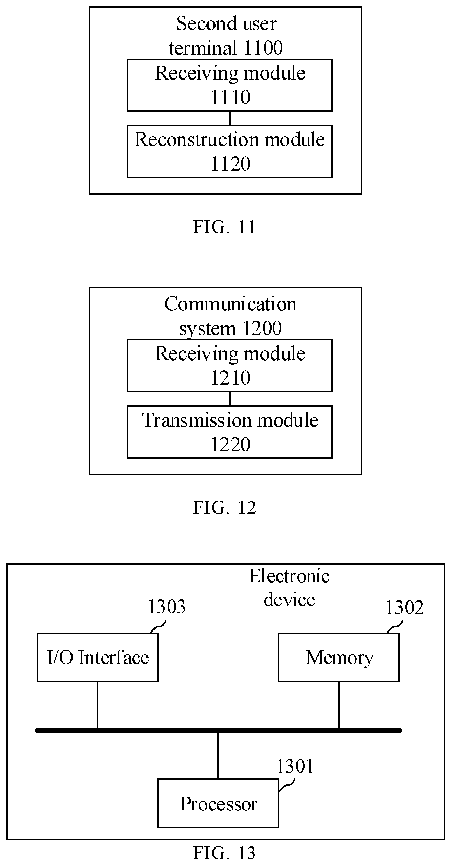

FIG. 11 is a schematic structural diagram of a second user terminal according to the present application.

In a fifth aspect, referring to FIG. 11, the present application provides a second user terminal 1100, including: a receiving module 1110 configured to receive first behavior instruction data of a first user terminal through a dedicated channel, the dedicated channel being a data transmission channel established in advance based on a web real-time communication, and the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and a reconstruction module 1120 configured to perform information reconstruction based on the first behavior instruction data to obtain reconstructed first multi-dimensional image data.

In some implementations, the dedicated channel includes a first dedicated channel between the first user terminal and a first communication network, and a second dedicated channel between the second user terminal and a second communication network, the first communication network is configured to send the first session request received from the first user terminal to a first application server, the first application server is configured to select, based on the reconstruction capability information of the first user terminal, corresponding first model data for the first user terminal, and instruct the first communication network to send a second session request to the second communication network, the second session request includes first dedicated channel media information and service type indication information; the second communication network is configured to send the second session request to a second application server corresponding to the second user terminal, the second application server is configured to select, based on the stored reconstruction capability information of the second user terminal, corresponding second model data for the second user terminal, and instruct the second communication network to send a third session request to the second user terminal, the third session request includes the first dedicated channel media information, the service type indication information and an identification of the second model data.

In some implementations, the receiving module 1110 is further configured to, before receiving the first behavior instruction data of the first user terminal through the dedicated channel, receive the third session request from the second communication network, the second user terminal 1100 further includes: a sending module configured to, in response to the third session request, send a session response to the second communication network, the session response including second dedicated channel media information of the second user terminal; and an establishment module configured to establish the second dedicated channel with the second communication network based on the second dedicated channel media information.

In some implementations, the reconstruction module 1120 is configured to download the second model data through the second dedicated channel, and perform information reconstruction on the first behavior instruction data based on the second model data to obtain reconstructed first multi-dimensional image data.

In some implementations, the first user terminal is further configured to, in response to the session response, establish the first dedicated channel with the first communication network based on the first dedicated channel media information, and download the first model data through the first dedicated channel; the second user terminal 1100 further includes: an extraction module configured to, after downloading the second model data through the second dedicated channel, perform feature extraction on the collected second multi-dimensional image data, and convert the extracted feature information of the second multi-dimensional image data into second behavior instruction data; and a sending module configured to send the second behavior instruction data to the second communication network through the second dedicated channel; the second communication network is configured to transmit the second behavior instruction data to the first communication network so that the first communication network transmits the second behavior instruction data to the first user terminal via the first dedicated channel; the first user terminal is configured to perform information reconstruction on the second behavior instruction data based on the first model data to obtain reconstructed second multi-dimensional image data.

It should be noted that the present application is not limited to the configurations and processing described above and shown in the figures. For convenience and simplicity of description, detailed description of any known method is omitted here, and for the working processes of the system, the modules and the units described above, reference may be made to corresponding processes in the foregoing method, which are not repeated here.

FIG. 12 is a schematic structural diagram of a communication system according to the present application.

In a sixth aspect, referring to FIG. 12, the present application provides a communication system 1200, including: a receiving module 1210 configured to receiving first behavior instruction data of a first user terminal, the first behavior instruction data being obtained by the first user terminal performing feature extraction on collected first multi-dimensional image data and converting extracted feature information of the first multi-dimensional image data, and the first behavior instruction data indicating behavior information of a first user to which the first user terminal belongs; and a transmission module 1220 configured to transmit the first behavior instruction data to a second user terminal through a dedicated channel, the dedicated channel being a data transmission channel established in advance based on a web real-time communication, and the second user terminal being configured to perform information reconstruction based on the first behavior instruction data to obtain reconstructed first multi-dimensional image data.

In some implementations, the dedicated channel includes a first dedicated channel and a second dedicated channel; the communication system includes at least a first communication network and a second communication network; and the transmission module 1220 is further configured to: before receiving the first behavior instruction data of the first user terminal, receive a first session request from the first user terminal via the first communication network, the first session request including at least first dedicated channel media information of the first user terminal and service type indication information; send, via the first communication network, the first dedicated channel media information and the service type indication information to the second communication network corresponding to an identification of the second user terminal; send, via the second communication network, the first dedicated channel media information and the service type indication information to the second user terminal; receive and forward a session response from the second user terminal to the first communication network via the second communication network, the session response including second dedicated channel media information of the second user terminal; send, via the first communication network, the second dedicated channel media information to the first user terminal, and establish the first dedicated channel with the first user terminal based on the first dedicated channel media information; and establish the second dedicated channel with the second user terminal by the second communication network based on the second dedicated channel media information.

In some implementations, the communication system further includes a first application server and a second application server, in response to being configured to send, via the first communication network, the first dedicated channel media information and the service type indication information to the second communication network, the transmission module 1220 is configured to send, via the first communication network, the first session request to the first application server, the first session request further includes reconstruction capability information of the first user terminal, the first application server selects, based on the reconstruction capability information of the first user terminal, corresponding first model data for the first user terminal, and instructs the first communication network to send a second session request to the second communication network, the second session request includes first dedicated channel media information and service type indication information.

In response to being configured to send, via the second communication network, the first dedicated channel media information and the service type indication information to the second user terminal, the transmission module 1220 is configured to send, via the second communication network, the second session request to the second application server, and the second application server selects, based on the stored reconstruction capability information of the second user terminal, corresponding second model data for the second user terminal, and instructs the second communication network to send a third session request to the second user terminal, the third session request includes the first dedicated channel media information, the service type indication information and an identification of the second model data.

In response to being configured to send, via the first communication network, the second dedicated channel media information to the first user terminal, the transmission module 1220 is configured to add an identification of the first model data in the session response via the first communication network, and send the session response carrying the identification of the first model data and the second dedicated channel media information to the first user terminal.

In some implementations, in response to being configured to transmit the first behavior instruction data to the second user terminal through the dedicated channel, the transmission module 1220 is configured to send the first behavior instruction data received through the first dedicated channel to the second communication network, and in the second communication network, send the first behavior instruction data to the second user terminal through the second dedicated channel.

In some implementations, after being configured to establish the second dedicated channel with the second user terminal by the second communication network based on the second dedicated channel media information, the transmission module 1220 is further configured to: receive, in the second communication network, second behavior instruction data from the second user terminal through the second dedicated channel, the second behavior instruction data being obtained by the second user terminal performing feature extraction on collected second multi-dimensional image data and converting extracted feature information of the second multi-dimensional image data based on the second model data; transmit the second behavior instruction data to the first communication network via the second communication network; and send, in the first communication network, the second behavior instruction data to the first user terminal through the first dedicated channel, the first user terminal being configured to perform information reconstruction on the second behavior instruction data based on the first model data to obtain reconstructed second multi-dimensional image data.

In some implementations, the first communication network includes a first session border controller, a first call session control function node, a first multimedia system application server, and a first service interaction platform, which are sequentially connected, the first session border controller is connected to the first user terminal, and the first service interaction platform is connected to the first application server; the second communication network includes a second session border controller, a second call session control function node, a second multimedia system application server, and a second service interaction platform, which are sequentially connected, the second session border controller is connected to the second user terminal, and the second service interaction platform is connected to the second application server; the first call session control function node is connected to the second multimedia system application server for a communication transport from the first communication network to the second communication network; and the second call session control function node is connected to the first multimedia system application server for a communication transport from the second communication network to the second communication network.

It should be noted that the present application is not limited to the configurations and processing described above and shown in the figures. For convenience and simplicity of description, detailed description of any known method is omitted here, and for the working processes of the system, the modules and the units described above, reference may be made to corresponding processes in the foregoing method, which are not repeated here.

In a seventh aspect, the present application further provides a network device.

Referring to FIG. 13, the network device includes: at least one processor 1301; and at least one memory 1302. The memory 1302 has at least one computer program stored thereon, and the at least one computer program is to be executed by the at least one processor 1301 to cause the at least one processor 1301 to implement the information processing method and the information transmission method described above.

In some implementations, the network device further includes at least one I/O interface 1303 connected between the processor 1301 and the memory 1302.

The processor is a device with a data processing capacity, including but not limited to, a central processing unit (CPU), or the like. The memory is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) is connected between the processor and the memory to enable information interaction between the memory and the processor, and includes, but is not limited to, a data bus or the like.

The present application further provides a computer-readable storage medium having a computer program stored thereon, the computer program is to be executed by a processor/processing core, to cause the processor/processing core to implement the information processing method and the information transmission method described above. The computer-readable storage medium may be a volatile or nonvolatile computer-readable storage medium.

Those of ordinary skill in the art will appreciate that all or some of operations, function modules/units in the system and apparatus disclosed above may be implemented as software, firmware, hardware, and suitable combinations thereof.

The methods provided in the present application may be widely applied to the fields of auxiliary manufacturing, auxiliary education, AR/VR video conferences, digital twinning and the like, and has a promising application prospect.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software to be executed by a processor, such as a central processing unit (CPU), a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired information and accessed by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present application has disclosed example implementations, and although specific terms are employed, they are used and should be interpreted merely in a generic and descriptive sense, not for purposes of limitation. In some instances, features, characteristics and/or elements described in connection with a particular embodiment may be used alone, or may be used in combination with features, characteristics and/or elements described in connection with other embodiments, unless expressly stated otherwise, as would be apparent to one skilled in the art. It will, therefore, be understood by those skilled in the art that various changes in form and details may be made without departing from the scope of the present application as set forth in the appended claims.

## Claims

1. An information processing method, applied to a first user terminal, comprising:
performing feature extraction on collected first multi-dimensional image data to obtain feature information of the first multi-dimensional image data;
converting the feature information into first behavior instruction data that indicates behavior information of a first user to which the first user terminal belongs; and
transmitting the first behavior instruction data to a second user terminal via a dedicated channel, wherein the dedicated channel is a data transmission channel established in advance based on a web real-time communication, and the second user terminal is configured to perform information reconstruction based on the first behavior instruction data to obtain reconstructed first multi-dimensional image data.

2. The method according to claim 1, wherein the first multi-dimensional image data comprises multi-dimensional image data, and the feature information is a multi-dimensional image data feature; performing feature extraction on the collected first multi-dimensional image data to obtain feature information of the first multi-dimensional image data comprises:
preprocessing multi-dimensional image data collected by an image sensor by at least one of image denoising, image alignment, attitude correction or motion compensation; and
performing feature extraction on the preprocessed multi-dimensional image data to obtain a multi-dimensional image data feature.

3. The method according to claim 1, wherein converting the feature information into the first behavior instruction data comprises:
matching the feature information with a semantic knowledge base to obtain semantic information corresponding to the feature information, wherein the semantic information comprises description information of an entity behavior; and
converting the description information of the entity behavior into corresponding first behavior instruction data.

4. The method according to claim 1, wherein the dedicated channel comprises a first dedicated channel between the first user terminal and a first communication network, and a second dedicated channel between the second user terminal and a second communication network; the method further comprises:
before transmitting the first behavior instruction data to the second user terminal via the dedicated channel, sending a first session request to the first communication network corresponding to the first user terminal, wherein the first session request comprises at least first dedicated channel media information of the first user terminal and service type indication information, and the first communication network is configured to forward, via the second communication network corresponding to the second user terminal, the first dedicated channel media information and the service type indication information to the second user terminal;
receive, via the first communication network, a session response from the second user terminal forwarded by the second communication network, wherein the session response is generated and sent to the second communication network by the second user terminal after receiving the first dedicated channel media information and the service type indication information, and the session response comprises second dedicated channel media information of the second user terminal; the first communication network is further configured to forward the session response to the first user terminal; the second communication network is further configured to establish the second dedicated channel with the second user terminal based on the received second dedicated channel media information; and
establish, in response to the session response, the first dedicated channel with the first communication network based on the first dedicated channel media information.

5. The method according to claim 4, wherein transmitting the first behavior instruction data to the second user terminal via the dedicated channel comprises:
sending the first behavior instruction data to the first communication network through the first dedicated channel,
wherein the first communication network is configured to send the first behavior instruction data to the second communication network, and the second communication network is configured to send the first behavior instruction data to the second user terminal through the second dedicated channel.

6. The method according to claim 4, wherein the first session request further comprises first reconstruction capability information that indicates an information reconstruction capability of the first user terminal;
the first communication network is further configured to: send the first session request to a first application server, wherein the first application server is configured to select, based on the reconstruction capability information of the first user terminal, corresponding first model data for the first user terminal, and instruct the first communication network to send a second session request to the second communication network, the second session request comprises the first dedicated channel media information and the service type indication information; and add an identification of the first model data in the session response before sending the session response to the first user terminal;
the second communication network is further configured to send the second session request to a second application server corresponding to the second user terminal, wherein the second application server is configured to select, based on the stored reconstruction capability information of the second user terminal, corresponding second model data for the second user terminal, and instruct the second communication network to send a third session request to the second user terminal, the third session request comprises first dedicated channel media information, service type indication information and an identification of the second model data;
the second user terminal is further configured to after downloading the second model data through the second dedicated channel, perform feature extraction on the collected second multi-dimensional image data through the second model data, convert the extracted feature information of the second multi-dimensional image data into second behavior instruction data, and send the second behavior instruction data to the second communication network through the second dedicated channel; and
after establishing the first dedicated channel with the first communication network based on the first dedicated channel media information, the method further comprises:
downloading the first model data through the first dedicated channel;
receiving the second behavior instruction data from the first communication network through the first dedicated channel, wherein the second behavior instruction data is transmitted from the second communication network to the second communication network; and
performing information reconstruction on the second behavior instruction data based on the first model data to obtain reconstructed second multi-dimensional image data.

7. An information processing method, applied to a second user terminal, comprising:
receiving first behavior instruction data of a first user terminal through a dedicated channel, wherein the dedicated channel is a data transmission channel established in advance based on a web real-time communication, and the first behavior instruction data is obtained by the first user terminal performing feature extraction on collected first multi-dimensional image data and converting extracted feature information of the first multi-dimensional image data, and the first behavior instruction data indicates behavior information of a first user to which the first user terminal belongs; and
performing information reconstruction based on the first behavior instruction data to obtain reconstructed first multi-dimensional image data.

8. The method according to claim 7, wherein the dedicated channel comprises a first dedicated channel between the first user terminal and a first communication network, and a second dedicated channel between the second user terminal and a second communication network, wherein the first communication network is configured to send a first session request received from the first user terminal to a first application server, wherein the first application server is configured to select, based on the reconstruction capability information of the first user terminal, corresponding first model data for the first user terminal, and instruct the first communication network to send a second session request to the second communication network, the second session request comprises first dedicated channel media information and service type indication information;
the second communication network is configured to send the second session request to a second application server corresponding to the second user terminal, wherein the second application server is configured to select, based on stored reconstruction capability information of the second user terminal, corresponding second model data for the second user terminal, and instruct the second communication network to send a third session request to the second user terminal, the third session request comprises first dedicated channel media information, service type indication information and an identification of the second model data; and
the method further comprises:
before receiving the first behavior instruction data of the first user terminal through the dedicated channel, receiving the third session request from the second communication network;
in response to the third session request, sending a session response to the second communication network, wherein the session response comprises second dedicated channel media information of the second user terminal; and
establishing the second dedicated channel with the second communication network based on the second dedicated channel media information.

9. The method according to claim 8, wherein performing information reconstruction based on the first behavior instruction data to obtain reconstructed first multi-dimensional image data comprises:
downloading the second model data through the second dedicated channel; and
performing information reconstruction on the first behavior instruction data based on the second model data to obtain reconstructed first multi-dimensional image data.

10. The method according to claim 8, wherein the first user terminal is further configured to, in response to the session response, establish the first dedicated channel with the first communication network based on the first dedicated channel media information, and download the first model data through the first dedicated channel, and
the method further comprises:
after downloading the second model data through the second dedicated channel, performing feature extraction on the collected second multi-dimensional image data, and converting extracted feature information of the second multi-dimensional image data into second behavior instruction data; and
send the second behavior instruction data to the second communication network through the second dedicated channel;
wherein the second communication network is configured to transmit the second behavior instruction data to the first communication network so that the first communication network transmits the second behavior instruction data to the first user terminal via the first dedicated channel; and the first user terminal is configured to perform information reconstruction on the second behavior instruction data based on the first model data to obtain reconstructed second multi-dimensional image data.

11. An information transmission method, applied to a communication system, comprising:
receiving first behavior instruction data of a first user terminal, wherein the first behavior instruction data is obtained by the first user terminal performing feature extraction on collected first multi-dimensional image data and converting extracted feature information of the first multi-dimensional image data, and the first behavior instruction data indicates behavior information of a first user to which the first user terminal belongs; and
transmitting the first behavior instruction data to a second user terminal through a dedicated channel, wherein the dedicated channel is a data transmission channel established in advance based on a web real-time communication, and the second user terminal is configured to perform information reconstruction based on the first behavior instruction data to obtain reconstructed first multi-dimensional image data.

12. The method according to claim 11, wherein the dedicated channel comprises a first dedicated channel and a second dedicated channel, the communication system comprises at least a first communication network and a second communication network, and the method further comprises:
before receiving the first behavior instruction data of the first user terminal, receiving a first session request from the first user terminal via the first communication network, wherein the first session request comprises at least first dedicated channel media information of the first user terminal and service type indication information;
sending, via the first communication network, the first dedicated channel media information and the service type indication information to a second communication network corresponding to an identification of the second user terminal;
sending, via the second communication network, the first dedicated channel media information and the service type indication information to the second user terminal;
receiving and forwarding a session response from the second user terminal to the first communication network via the second communication network, wherein the session response comprises second dedicated channel media information of the second user terminal;
sending, via the first communication network, the second dedicated channel media information to the first user terminal, and establishing the first dedicated channel with the first user terminal based on the first dedicated channel media information; and
establishing the second dedicated channel with the second user terminal by the second communication network based on the second dedicated channel media information.

13. The method according to claim 12, wherein the communication system further comprises a first application server and a second application server, sending, via the first communication network, the first dedicated channel media information and the service type indication information to the second communication network comprises:
sending, via the first communication network, the first session request to the first application server, wherein the first session request further comprises reconstruction capability information of the first user terminal;
selecting, by the first application server, corresponding first model data for the first user terminal based on the reconstruction capability information of the first user terminal, and instructing the first communication network to send a second session request to the second communication network, wherein the second session request comprises the first dedicated channel media information and the service type indication information;
sending, via the second communication network, the first dedicated channel media information and the service type indication information to the second user terminal comprises:
sending, via the second communication network, the second session request to the second application server; and
selecting, by the second application server, corresponding second model data for the second user terminal based on stored reconstruction capability information of the second user terminal, and instructing the second communication network to send a third session request to the second user terminal, wherein the third session request comprises the first dedicated channel media information, the service type indication information, and the identification of the second model data, wherein
sending, via the first communication network, the second dedicated channel media information to the first user terminal comprises:
adding an identification of the first model data in the session response via the first communication network; and
sending the session response carrying the identification of the first model data and the second dedicated channel media information to the first user terminal.

14. The method according to claim 12, wherein transmitting the first behavior instruction data to the second user terminal through the dedicated channel comprises:
sending the first behavior instruction data received through the first dedicated channel to the second communication network; and
in the second communication network, sending the first behavior instruction data to the second user terminal through the second dedicated channel.

15. The method according to claim 13, further comprising:
after establishing the second dedicated channel with the second user terminal by the second communication network based on the second dedicated channel media information, receiving, in the second communication network, second behavior instruction data from the second user terminal through the second dedicated channel, wherein the second behavior instruction data is obtained by the second user terminal performing feature extraction on collected second multi-dimensional image data and converting extracted feature information of the second multi-dimensional image data based on the second model data; and
transmitting the second behavior instruction data to the first communication network via the second communication network; and
sending, in the first communication network, the second behavior instruction data to the first user terminal through the first dedicated channel, wherein the first user terminal is configured to perform information reconstruction on the second behavior instruction data based on the first model data to obtain reconstructed second multi-dimensional image data.

16. The method according to claim 13, wherein the first communication network comprises a first session border controller, a first call session control function node, a first multimedia system application server, and a first service interaction platform, which are sequentially connected, wherein the first session border controller is connected to the first user terminal, and the first service interaction platform is connected to the first application server;
the second communication network comprises a second session border controller, a second call session control function node, a second multimedia system application server, and a second service interaction platform, which are sequentially connected, wherein the second session border controller is connected to the second user terminal, and the second service interaction platform is connected to the second application server,
wherein the first call session control function node is connected to the second multimedia system application server for a communication transport from the first communication network to the second communication network; and the second call session control function node is connected to the first multimedia system application server for a communication transport from the second communication network to the second communication network.

17. A user terminal, comprising:
an extraction module configured to perform feature extraction on collected first multi-dimensional image data to obtain feature information of the first multi-dimensional image data;
a conversion module configured to convert the feature information into first behavior instruction data that indicates behavior information of a first user to which a first user terminal belongs; and
a transmission module configured to transmit the first behavior instruction data to a second user terminal via a dedicated channel, wherein the dedicated channel is a data transmission channel established in advance based on a web real-time communication, and the second user terminal is configured to perform information reconstruction based on the first behavior instruction data to obtain reconstructed first multi-dimensional image data.

18. A user terminal, comprising:
a receiving module configured to receive first behavior instruction data of a first user terminal through a dedicated channel, wherein the dedicated channel is a data transmission channel established in advance based on a web real-time communication, the first behavior instruction data is obtained by the first user terminal performing feature extraction on collected first multi-dimensional image data and converting extracted feature information of the first multi-dimensional image data, and the first behavior instruction data indicates behavior information of a first user to which the first user terminal belongs; and
a reconstruction module configured to perform information reconstruction based on the first behavior instruction data to obtain reconstructed first multi-dimensional image data.

19. A communication system, comprising:
a receiving module configured to receive first behavior instruction data of a first user terminal, wherein the first behavior instruction data is obtained by the first user terminal performing feature extraction on collected first multi-dimensional image data and converting extracted feature information of the first multi-dimensional image data, and the first behavior instruction data indicates behavior information of a first user to which the first user terminal belongs; and
a transmission module configured to transmit the first behavior instruction data to a second user terminal through a dedicated channel, wherein the dedicated channel is a data transmission channel established in advance based on a web real-time communication, and the second user terminal is configured to perform information reconstruction based on the first behavior instruction data to obtain reconstructed first multi-dimensional image data.

20. A network device, comprising:
at least one processor; and
a memory having at least one computer program stored thereon, the at least one computer program is to be executed by the at least one processor, to cause the at least one processor to implement the method according to any one of claims 1 to 10.

21. A computer-readable storage medium having a computer program stored thereon, the computer program is to be executed by a processor, to cause the processor to implement the method according to any one of claims 1 to 10.
